# EUROPEAN PATENT SPECIFICATION

(11) **EP 4 051 075 B1**
(45) Date of publication and mention of the grant of the patent: **02.04.2025**
(21) Application number: 20882670.1
(22) Date of filing: 25.02.2020
(51) Int. Cl.: A47L 9/28, A47L 9/04

(54) **VACUUM CLEANER AND CONTROLLING METHOD**
STAUBSAUGER UND STEUERUNGSVERFAHREN
ASPIRATEUR ET PROCÉDÉ DE COMMANDE

(30) Priority: 29.10.2019 KR 20190135360
(43) Date of publication of application: 07.09.2022
(73) Proprietor: LG Electronics Inc., SEOUL 07336 (KR)
(72) Inventor: KWAK, Donghoon, Seoul 08592 (KR); KO, Jaehwan, Seoul 08592 (KR); KWEON, Hyukdo, Seoul 08592 (KR)
(74) Representative: Vossius & Partner Patentanwälte Rechtsanwälte mbB
(86) International application number: PCT/KR2020/002666
(87) International publication number: WO 2021/085752

(56) References cited:
- EP-A1- 0 413 359
- EP-A1- 0 451 787
- JP-A- 2011 206 354
- KR-A- 19990 018 818
- KR-A- 20150 104 625
- KR-A- 20170 033 579
- KR-B1- 100 809 740
- US-A- 5 319 827

## Description

### [Technical Field]

Embodiments of the present invention relate to a vacuum cleaner and a controlling method, more particularly, to a vacuum cleaner that is configured to control a suction power and a duct pickup performance based on the material of the floor and the amount of the dust and foreign substances placed on the floor, and a controlling method of the same.

### [Background Art]

Generally, a vacuum cleaner is an electric appliance that is configured to suck air containing dust by means of a suction power generated by a suction motor mounted in a cleaner body and control a dust separation mechanism to filter the dust. The vacuum cleaner is categorized into canister type cleaner, an upright type cleaner and a handy type cleaner.

The canister type cleaner incudes a cleaner body; a suction nozzle independently provided from the cleaner body and configured to suck dust; and a connection device provided to connect the cleaner body and the suction nozzle with each other. The upright type cleaner includes a cleaner body; and a suction nozzle rotatably coupled to the cleaner body. The handy type cleaner incudes a cleaner body that is held by a user in the hand.

Each of the various cleaners includes a nozzle having a suction hole for sucking air to suck dust from the floor. The nozzle includes a brush for effectively sucking dust from the floor and the brush provided in the nozzle is rotated at the moment of the suction power generation so separate foreign substances from the floor and duck the dust more effectively.

Cited reference 1 (Korean Patent No. 10-2009-0117173, published on 16th day of October, 2019) discloses a cleaner that is configured to control the rotation speed of a brush provided to additionally help a suction power.

However, a cleaning object area may be a wood floor, a carpet and other diverse materials-made floors. Especially, an optional resistance of hairy fabric (e.g., a carpet) is likely to increase and lock the brush therein advantageously, when a dust suction power of the cleaner increases. Because of that, the suction power and the brush have to be controlled based on characteristics of the floor in the cleaning object area. Document EP0413359A1 discloses a controlling method for a vacuum cleaner comprising sensing dust, sensing floor material and determining suction power.

### [Disclosure]

### [Technical Problem]

To overcome the disadvantages, an object of the present invention is to address the above-noted and other problems.

Another object of the present invention is to provide a cleaner that may control a suction power and a drive of a brush based on characteristics of the floor that are figured out based on the information recognized by a dust sensor and a floor sensor, and a controlling method of the same

A further object of the present invention is to provide a cleaner that may perform effective dust suction by increasing the suction power instantly and decreasing the suction power slowly over time delay, and a controlling method of the same.

### [Technical Solution]

To achieve these objects and other advantages and in accordance with the purpose of the embodiments, as embodied and broadly described herein, embodiments of the present disclosure may provide a vacuum cleaner and a controlling method of the same that may prevent increase of an operation resistance by lowering a suction power when vacuum-cleaning on a carpet, compared with a wood floor.

Embodiments of the present invention may also provide a vacuum cleaner and a controlling method of the same that prevent a brush from being locked by spacing the height of the brush apart from the floor, when cleaning on the carpet, and compensate a dust pickup performance by increasing the rotation speed of the brush.

Embodiments of the present invention may provide a vacuum cleaner and a controlling method of the same that may perform effective cleaning by increasing the suction power without an additional time delay, when increasing the suction power, and decreasing the suction power after a preset time delay, when decreasing the suction power, in case of adjusting the suction power.

The present invention provides a controlling method of a vacuum cleaner comprising a dust setting step for sensing dust in a cleaning object area by means of dust sensor provided in the vacuum cleaner and converting the sensed dust into a percent rate; a floor material sensing step for sensing a material of the floor in the cleaning object area by means of a floor sensing step provided in the vacuum cleaner; a standard setting step for setting a dust suction standard of the vacuum cleaner based on the sensed material of the floor; and a suction power determining step for comparing the sensed dust rate with the dust suction standard and determining the suction power of the vacuum cleaner based on the result of the comparison.

A rotation speed of a brush arranged in a nozzle of the vacuum cleaner and a brush height may be adjusted based on the set suction standard.

The dust suction standard in the standard setting step is a preset dust rate. The controlling method of the vacuum cleaner may further comprise a first brush setting step for setting the rotation speed of the brush that is arranged in the nozzle of the vacuum cleaner after the standard setting step; and a second brush setting step for changing the height of the brush after the first brush setting step. The standard setting step, the first brush setting step and the second brush setting step may be sequentially performed after sensing the floor material.

The controlling method of the vacuum cleaner may further comprise a first brush setting step for setting the rotation speed of the brush arranged in the nozzle of the vacuum cleaner after the standard setting step. The standard setting step and the first brush setting step may be sequentially performed after the floor material is sensed.

While the steps are repeatedly performed, a dust suction power of the vacuum cleaner may be determined based on the sensed dust rate and floor material. The controlling method of the vacuum cleaner may further comprise a suction power adjusting step for comparing a first determined suction power determined earlier with a second determined suction power determined later out of the repeatedly determined dust suction powers.

When the second determined suction power is larger than the first determined suction power in the suction power adjusting step, the suction power adjusting step may maintain the second determined suction power.

When the second determined suction power is smaller than the first determined suction power in the suction power adjusting step, the suction power adjusting step may maintain the second determined suction power after a preset time period passes.

Embodiments of the present invention may also provide a vacuum cleaner comprising a nozzle comprising a suction hole for sucking dust from the floor; a brush rotatably provided in the nozzle and of which the height is adjustable; a nozzle motor configured to provide a drive power needed in the rotation of the brush and the height adjusting of the brush; a suction power supply unit configured to supply a suction power of the dust to the nozzle; a floor sensor configured to sense a material of the floor; and a first controller configured to set a dust suction standard of the nozzle based on the floor material sensed by the floor sensor and apply an operation signal to the nozzle motor.

The first controller may control the rotation sped of the brush to be variable based on the floor material and whether to adjust the height of the brush based on the floor material.

The vacuum cleaner may further comprise a dust sensor configured to sense dust on the floor; and a second controller configured to compare a rate of the dust sensed by the dust sensor with the dust suction standard set by the first controller and determine the suction power of the nozzle based on the result of the comparison. The second controller repeatedly may determine the suction power of the nozzle based on variation of the dust rate sensed by the dust sensor.

Further scope of applicability of the present invention will become apparent from the detailed description given hereinafter. However, it should be understood that the detailed description and specific examples, while indicating preferred embodiments of the disclosure, are given by illustration only, since various changes and modifications within the scope of the disclosure will become apparent to those skilled in the art from this detailed description.

### [Advantageous Effects]

Accordingly, the embodiments have following advantageous effects. According to the embodiments of the present disclosure, the cleaner may prevent the increase of the operation resistance by controlling the suction power based on the material of the floor.

In addition, the cleaner may prevent the brush from being locked in the hairy fabric (e.g., a carpet) by controlling the rotation power of the brush and perform the effective cleaning by effectively separating dust from the floor.

In addition, the cleaner may expect the instant improvement of the dust suction performance, because it has no time delay when increasing the suction power and prevent the dust backflow caused by the instant suction power decrease, because it has the predetermined time delay when decreasing the suction power. Also, the cleaner may perform the effective cleaning even in a section where the floor characteristic or dust amount is changed.

### [Description of Drawings]

FIG. 1 is a perspective diagram illustrating a structure of a vacuum cleaner according to the present disclosure;
FIG. 2 is a block diagram schematically illustrating a control configuration according to one embodiment;
FIG. 3 is a flow chart illustrating a controlling method according to one embodiment;
FIG. 4 is a flow chart illustrating a controlling method configured of a suction power determining step shown in FIG. 3; and
FIG. 5 is a flow chart illustrating a controlling method configured of a suction power adjusting step.

### [Mode for Invention]

Reference will now be made in detail to the preferred embodiments of the present disclosure, examples of which are illustrated in the accompanying drawings. All terms disclosed in this specification correspond to general terms understood by persons having ordinary skill in the art to which the present disclosure pertains unless the terms are specially defined. If the terms disclosed in this specification conflict with general terms, the terms may be understood on the basis of their meanings as used in this specification.

Description will now be given in detail according to exemplary embodiments disclosed herein, with reference to the accompanying drawings. For the sake of brief description with reference to the drawings, the same components may be provided with the same reference numbers, and description thereof will not be repeated. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations and substitutes in addition to those which are particularly set out in the accompanying drawings. A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

It will be understood that although the terms first, second, A, B, (a), (b), etc. may be used herein to describe various elements, these elements should not be limited by these terms. These terms are generally only used to distinguish one element from another.

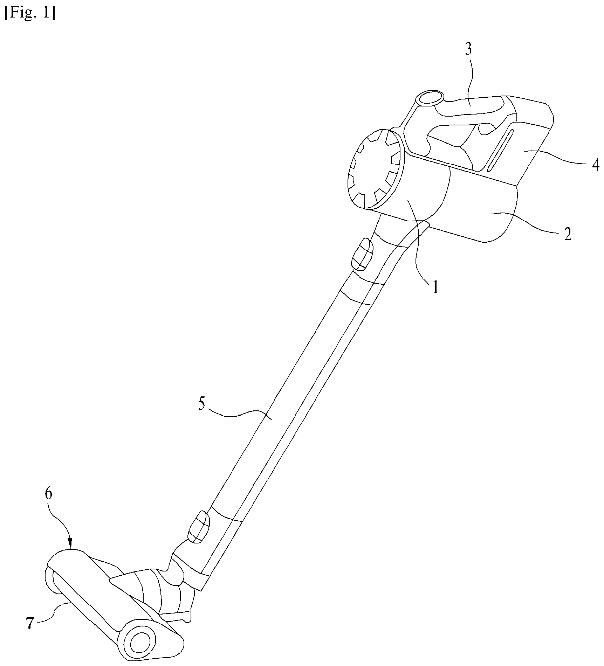

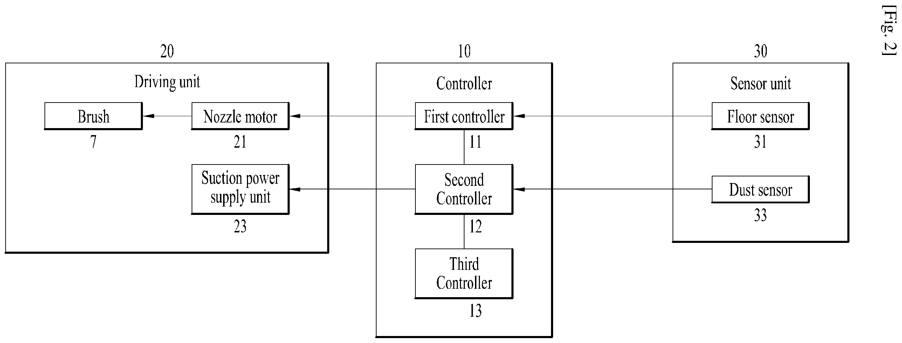

FIG. 1 is a perspective diagram illustrating a structure of a vacuum cleaner according to the present disclosure and FIG. 2 is a block diagram schematically illustrating a control configuration according to one embodiment.

Referring to FIGS. 1 and 2, the present disclosure will be described in detail.

The vacuum cleaner may include a cleaner body 1 having a motor for generated a suction power; a nozzle 6 having a suction hole for sucking air containing dust; and an extending pipe 5 provided to connect the cleaner body 1 and the nozzle 6 with each other.

Meanwhile, although not shown in the drawings, the nozzle 6 may be directly connected to the cleaner body 1 without the extending pipe 5 (the handy type vacuum cleaner) or a dust bucket and the cleaner body may be connected via a hose (the canister type cleaner). The vacuum cleaner and the controlling method according to the present disclosure has to be understood to include various types that are configured to control a rotation speed of a brush provided in the nozzle, height variation of the brush and the suction power, not only a specific type.

Meanwhile, the cleaner body 1 may include a dust container 2 provided to store the dust separated from the air. Accordingly, the dust sucked via the nozzle 6 may be collected in the dust container 2 through the extending pipe 5.

The cleanser body 1 may include handle 3 that is provided to be held by the user. The user may perform cleaning in a state of holding the handle 3 in the hand.

The cleaner body may include a battery (not shown); and a battery loading portion 4 in which the battery (not shown) is loaded. The battery loading portion 4 may be provided under the handle 3. The battery (not shown) may be connected with the nozzle 6 and configured to supply power to the nozzle 6.

A brush 7 may be rotatably provided in the nozzle 6 and the height of the brush 7 may be variable from the floor of the cleaning object are. Here, the range of the height variation may be restricted by the shape and size of the nozzle 6.

The brush 7 may be a brush having a hair brushes or a cotton flannel brush having a cotton patch mounted therein. Here, the brush 7 may be detachably coupled to the nozzle 6 such that the user can exchange the brush 7 as necessity rises.

The brush 7 is rotated to sweep dust and foreign substances that are stuck to or stacked on the floor of the cleaning object area and move them to the suction hole of the nozzle 6. After that, the dust and foreign substances may be collected in the dust container 2 by the suction power. In addition, the brush 7 may form an air current in the nozzle 6 by means of a centrifugal force applied thereto as it is rotated. Accordingly, the physical force generated by the rotation of the brush 7 and the air current generated by a centrifugal force may increase the suction power.

A shaft of the brush 7 may be provided in parallel with the floor and the shaft may be equal to the width of the nozzle 6 to stabilize the structure.

Meanwhile, a nozzle motor 21 may be further provided to supply power to the brush 7 and the nozzle motor 21 may be independently provided with respect to a motor (not shown) provided in a suction power supply unit 23. That is because the brush 7 needs the control of the rotation and height variation based on the user's necessity as mentioned above.

Specifically, the nozzle motor 21 may include a drive shaft (not shown) coupled to the brush 7. As the drive shaft is rotated, the brush 7 may be rotated and the drive shaft may engage with a plurality of gears to control the height variation of the brush 7. In addition, the motor for rotating the brush 7 and the motor for varying the height of the brush 7 may be provided independently.

The motor used for the suction power supply unit23 may be a fan motor (not shown) that is proper to a small size and a high speed. The suction power supply unit 23 may form a negative pressure to facilitate the vacuum cleaner sucking external air.

The controller 10 may include a first controller 11 configured to control the rotation speed and the height variation of the brush 7 by driving the nozzle motor 21; a second controller 12 configured to determine the dust suction strength of the vacuum cleaner; and a third controller 13 configured to adjust the suction strength of the vacuum cleaner.

The sensor unit 30 may include a floor sensor 31 and a dust sensor 33. The types of the sensor unit may be applied diversely.

The floor sensor 31 may sense a distance by means of an infrared sensor so as to measure the type of the floor and current fluctuation of the fan motor or the nozzle motor. As one example, the floor sensor using the infrared sensor may be configured of a luminescent sensor for emitting light and a light receiving sensor for receiving the light transmitted via the material of the floor or having the amount of the reflected light to be variable before transmitted thereto.

The current fluctuation generated by the friction between the floor and the rotating brush may be sensed and the type of the floor may be sensed based on the current fluctuation. Based on a similar principle, current fluctuation of the fan motor may be sensed to sense the type of the floor.

The dust sensor 33 may be configured of an infrared sensor to determine the amount of dust. This principle is similar to the above description that the light emitted from the luminescent sensor has a different transmission amounts based on the amount of the dust and a different light reflection amount such that the amount of the dust may be determined based on the amount of the light incident on the light receiving sensor.

Meanwhile, the organic relation among the controller 10, the drive unit 20, and the sensor unit 30 will be described as follows.

Information on the amount of the dust and the material of the floor that are measured by the sensor unit 30 may be transmitted to the controller 10. The controller 10 may control the operation of the drive unit 20 based on the measured amount of the dust and the measured material of the floor.

Specifically, the first controller 10 may set a suction standard of the nozzle based on the material of the floor and apply a signal to the nozzle motor 32, to control the rotation speed of the brush 7 and the height variation of the brush 7.

The dust suction standard means a suction power generation standard of the suction power supply unit 23 based on a preset mode of the vacuum cleaner. As one example, the suction power may be categorized into strong, middle and weak modes based on the relative rotation speed variation of the fan motor (not shown). Each of the modes may be set based on a range of the predetermined dust amounts, regardless of the sensed dust amount. A different range of the dust amounts may be set in each of the modes.

In other words, the weak mode may mean a mode having the suction power of the cleaner to be week when the dust amount is relatively small. The middle mode may mean a mode having the suction power to be a stronger than the weak mode when the dust amount is large. The strong mode may mean a mode having the maximum range of the suction power generated in the vacuum cleaner when the dust amount is very large. The suction power standard may be understood to be set for the strong, middle and weak modes based on the material of the floor sensed by the floor sensor 31.

Specifically, as the suction power of the vacuum cleaner becomes stronger like a carpet, vacuum-cleaning may be performed in a relatively weak suction power mode in case of a material of the floor increasing the operation resistance of the vacuum cleaner by increasing the range of the dust amounts in a relatively weak suction power mode, so as to prevent the increase of the operation resistance. The vacuum cleaning may be performed in a relatively strong suction power mode by narrowing the range of the dust amounts in a relatively weak suction power in case of a material of the floor that is less affected by the operation resistance with respect to the suction power.

In other words, even unless the user performs additional manipulation for adjusting the suction power, the suction power may be adjusted based on the material of the floor such that easy vacuum cleaning may be facilitated and the increase of the operation resistance may be prevented.

The second controller 122 may compare a rate of the dust sensed by the dust sensor with the dust suction standard set by the first controller 11 and determine the suction power of the nozzle 6 based on the result of the comparison.

The rate of the dust may be gained by converting the dust measured by the dust sensor 33 into a rate of 0~100%. The rate may be calculated based on the dust and foreign substances that occupy the cleaning object area. Or, the amount of the cumulative dust may be measured and converted into a percentage rate. In other words, the rate of the dust may be understood as a rate of a digitized dust rate.

The second controller 12 may compare the digitized dust rate with the dust suction standard set by the first controller 11 and control and control the suction power supply unit23 based on the result of the comparison. For easy comparison calculation, the suction power standard may be set based on the dust rate.

The third controller 13 may be configured to control the suction power determined by the second controller 12. More specifically, the second controller 12 may determine the suction power of the vacuum cleaner based on other information that is continuously transmitted based on the material of the floor during the vacuum-cleaning, such that the determined suction power of the vacuum cleaner may be variable continuously.

The third controller 13 may compare the former and latter suction powers determined by the second controller 12 with each other and adjust the suction power based on the result of the comparison. As one example, the former suction power determined by the second controller 12 may be defined as the first determined suction power. The latter suction power determined by the second controller 12 may be defined as the second determined suction power. The third controller may compare the first and second determined suction powers with each other. When the second determined suction power is bigger than the first determined suction power, the third controller may maintain the second determined suction power. When the second determined suction power is bigger than the first determined suction power, the third controller may maintain the second determined suction power after a preset time period.

The third controller 13 may perform the control for adjusting the suction power of the vacuum cleaner and it may be electrically connected with the suction power supply unit23 via the second controller 12.

As mentioned above, when the suction power of the vacuum cleaner is increased under the control of the third controller 13, the suction power may be instantly increased without additional time delay so as to effectively suck dust. When the suction power is decreased, the suction power may be decreased in a preset time period to prevent the dust from flowing back from the extending pipe 5 connecting the nozzle 6 and the dust container 2 with each other and to perform effective vacuum-cleaner even in a section where the material of the floor or the dust amount is changed.

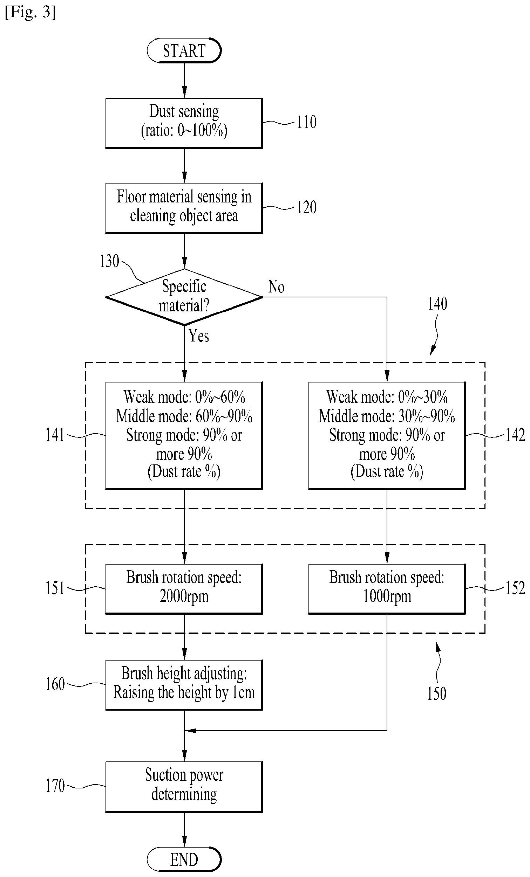

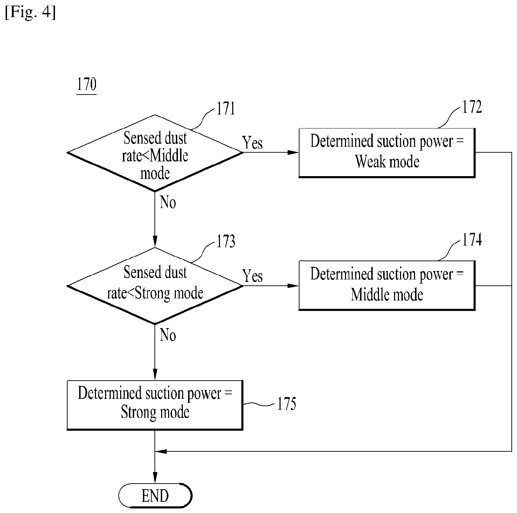

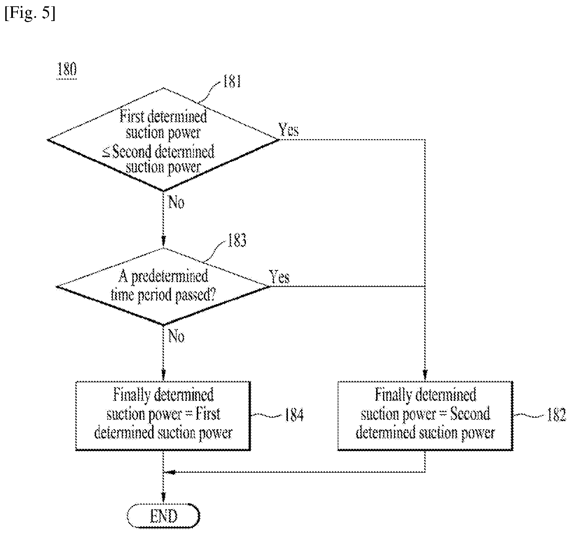

FIG. 3 is a flow chart illustrating a controlling method according to one embodiment. FIG. 4 is a flow chart illustrating a controlling method configured of a suction power determining step shown in FIG. 3. FIG. 5 is a flow chart illustrating a controlling method configured of a suction power adjusting step.

Hereinafter, the controlling method will be described referring to FIGS. 3 through 5.

When the vacuum-cleaning is performed based on the signal applied to the vacuum cleaner or an auto-suction power adjusting signal is input by means of the user's manipulation during the cleaning, the dust sensor 33 senses dust in the cleaning object area and set the sensed dust to be a percentage rate (110) or the floor sensor 31 senses a material of the floor in the cleaning object area (120).

Specifically, the illustrated embodiment discloses that the user may not perform the additional manipulation for adjusting the suction power of the vacuum cleaner, as mentioned above. The control of this embodiment may be automatically applied to an initial stage of the vacuum cleaning after power is applied to the vacuum cleaner to perform the vacuum cleaning. Alternatively, when a predetermined signal is input based on the user's manipulation during the cleaning, the control may be applied. If this control is performed based on the manipulation signal, the button for inputting the manipulation signal may be provided in the handle 3 to facilitate the easy manipulation.

It is not necessary to perform the dust sensing step 110 and the floor material sensing step 120 sequentially, because the second controller 12 determines the suction power based on the result of the comparison between the dust sensed in the dust sensing step 110 and the suction standard set in a standard setting step 140 which will be described later.

That is, the dust sensing step 110 may not restrain the order of the control under the condition that the dust sensing step 110 is performed before a suction power determining step 170.

Meanwhile, the dust rate may be converted into a range of 0~100% and the setting of the sensed dust as the rate may be performed based on an additional logic applied to the dust sensor 33 or by the second controller 12.

A cleaning object area floor material sensing step 120 is configured to sense a material of the floor (e.g., a carpet and a wood floor). After sensing the floor material, it may be determined whether the floor material is a specific material 130. Input values for a standard setting step 140 and a first brush setting step 150 may be variable based on whether the floor material is a specific one. Also, presence of a second brush setting step 160 may be variable.

As one example of the determination about whether the floor material is a specific material, it is determined whether the floor material is a carpet. When the floor material is the carpet based on the result of the determination, a carpet standard setting step 141 may be performed. When the floor material is another one not the carpet (e.g., a normal wood floor), a wood floor standard setting step 142 may be performed. The carpet standard setting step may be defined as the first standard setting step 141 and the wood floor standard setting step 142 may be defined as the second standard setting step 142. The specific material may be the carpet to describe the embodiment for each understanding.

When the sensed floor material is a carpet, in the first standard setting step 141, the first controller 11 may set the weak mode to have 0% or more and less than 60% and the middle mode to have 60% or more and less than 90% and the strong mode to have 90% or more and 100% or less as the dust suction standard.

When the sensed material is a wood floor, the second standard setting step 142, the first controller 11 may set the weak mode to have 0% or more and less than 60% and the middle mode to have 30% or more and less than 90% and the strong mode to have 90% or more and 100% or less as the dust suction standard.

A rate as the standard for each mode may be a digitized rate of the dust amount and understood as a predetermined range. In other words, the rate of the dust sensed in the dust sensing step 110 may be compared with the dust rate for each mode set in the standard setting step 140 and determine the dust suction power of the vacuum cleaner based on the result of the comparison 170. As mentioned above, the modes may have respective different modes. It means that the suction power relatively rises as going to the weak, middle and strong modes gradually.

As mentioned above, the range of the dust rates in which the modes are performed may be set to be different based on the floor material. The weak mode may cover a broader range of the dust rates, in case of the carpeted floor. Accordingly, the operation resistance which might be generated as the suction power becomes stronger on the carpeted floor may be prevented.

The middle mode may cover a broader range of the dust rates, in case of the wood floor and effective vacuum-cleaning may be then performed. That is because the wood floor is less affected by the operation resistance caused by the increase of the suction power than the carpeted floor.

Meanwhile, the range of the standard setting step 150 may be set to be different based on the floor material to prevent the increase of the operation resistance as mentioned above. However, the dust suction power for the carpeted floor may be even decreased.

Accordingly, the first brush setting step 150 for setting the rotation speed of the brush 7 arranged in the nozzle 6 may set the rotation speed of the brush to be varied based on whether the floor material is the carpet to compensate the decreased dust suction power on the carpeted floor.

More specifically, the first standard setting step 141 may set the suction standard when the floor is sensed as the specific material (e.g., the carpet) based on the result of the determination on whether the floor is a specific material. After the first standard setting step 141, the rotation speed of the brush 7 may be set to be 2000rpm 151. Accordingly, the first standard setting step 141 may compensate the decrease of the suction power that might be generated by setting the dust rate, in which the weak mode having the weakest suction power is operated, to be the broadest (the dust pickup performance may be enhanced).

The second standard setting step 142 may set the suction standard in case the floor material is not the specific material based on the result of the determination on whether the floor material is the specific material. Accordingly, the rotation speed of the brush 7 may be set to be 1000rpm 151 after the second standard setting step 142. That is because the dust rate, in which the middle mode having the stronger suction power than the weak mode is operated, is set the broadest.

After setting the rotation speed of the brush to be 2000rpm 151, the height of the brush 7 may be increased 1cm higher. That is because the brush 7 is relatively rotated fast and the brush 7 rotating fast is likely to be tangled and locked in a hairy fabric. The height variation of the brush 7 may mean the relatively height variation from the floor. As mentioned above, the height variation of the brush 7 may be restricted by the shape and size of the nozzle 6.

Meanwhile, once the rotation speed of the brush is set to be 1000rpm 152, no more control for varying the height of the brush 7 may be performed. In case of the wood floor, there is less objects in which the rotating brush is tangled or locked and the area in which the middle mode having the stronger suction power than the weak mode is operated may be broad based on the range already set in the second standard setting step 142.

The standard setting step 140, the first brush setting step 150 and the second brush setting step 160 is sequentially performed after the floor material is sensed. More specifically, when the floor material is the specific material (e.g., the carpet), the first standard setting step 141, the step 151 for setting the rotation speed of the brush to be 2000rpm in the first brush setting step, and the second brush setting step may be sequentially performed. When the floor material is not the specific material (e.g., the carpet), the second standard setting step 142, the step for setting the rotation speed of the brush to be 1000rpm of the first brush setting step may be sequentially performed.

The range of the dust rates, the rotation speed of the brush and the height variation value of the brush in each mode may be one of diverse embodiments and the embodiments may not be limited by the values.

Meanwhile, the dust suction power of the vacuum cleaner may be determined based on the sensed dust rate and the floor material. In other words, the suction power determining step 170 compares the sensed dust rate with the dust suction standard and determine the suction power based on the result of the comparison.

More specifically, when the rate of the dust sensed by the dust sensor 110 is smaller than the middle mode, the determined suction power of the vacuum cleaner may be determined as the weak mode. When the dust rate is larger than the middle mode and smaller than the strong mode, the determined suction power of the vacuum cleaner may be determined as the middle mode. When the sensed dust rate is larger than the strong mode, the determined suction power of the vacuum cleaner may be determined as the strong mode.

According to the above-noted embodiment, the range of the suction power strengths may be set based on the floor material in the cleaning area, and the rotation speed of the brush and the height variation of the brush may be determined based on the floor material. Hence, the dust amount in the cleaning object area may be compared with the suction power strength set based on the floor material and the suction power of the vacuum cleaner may be determined based on the result of the comparison.

Meanwhile, each of the steps may be repeatedly performed during the vacuum-cleaning. As each of the steps is repeated performed, the sensed dust rate and the determined suction power determined based on the floor material may be continuously updated. In this instance, as the determined suction power of the vacuum cleaner may be continuously updated, it becomes necessary to adjust the suction power of the vacuum cleaner. Accordingly, the determined suction powers updated in the vacuum cleaner may be compared with each other and the suction power of the vacuum cleaner may be adjusted, which is a suction power adjusting step 180 and will be described later.

The suction power adjusting step 180 may compare the former one with the next one of the dust suction powers repeatedly determined in the suction power determining step 170 and then adjust the suction power based on the result of the comparison. Hereinafter, the suction power determined earlier in chronological order may be defined as the first determined suction power and the next one determined later may be defined as the second determined suction power.

The suction power adjusting step 180 may compare the first determined suction power with the second determined suction power 181. When the first determined suction power is smaller than the second determined suction power, the finally determined suction power of the vacuum cleaner may be adjusted to be the second determined suction power 182. In other words, when the suction power needs to be increased after the above-noted steps, the suction power may be instantly increased without an additional time delay and then suck dust.

When the first determined suction power is larger than the second determined suction power in the suction power comparing step 181, it may be determined whether a preset time period passes 183. When the preset time period passes, the finally determined suction power of the vacuum cleaner may be adjusted to be the second determined suction power 182. Unless the preset time period passes, the finally determined suction power may be adjusted to be the first determined suction power 184.

More specifically, when the first determined suction power is larger than the second determined suction power, it may mean that the suction power determined based on the floor material of the cleaning object area and the dust amount needs to be decreased. In this instance, the finally determined suction power may be adjusted to be the second determined suction power after the preset time period passes after determining whether the preset time period passes 183, so as to reduce the suction power. In addition, unless the preset time period passes, the finally determined suction power may be maintained to be the first determined suction power such that the suction power decrease may be performed in the preset time period. Here, the process of decreasing the suction power may be gradually decreased.

As mentioned above, it is preferred that the suction power increase is instantly performed at the moment when the suction power increase is needed. However, when the suction power decrease is instantly performed as it is needed, dust that is not collected in the dust container 2 is likely to flow back to the outside via the nozzle. Or, if the suction power is instantly decreased in a section where the floor material is changed, the dust suction may not be smoothly performed. Accordingly, it is preferred that the suction power may be decreased in a preset time period when the suction power decrease is performed.

Meanwhile, the finally determined suction power may mean the final dust suction power that is adjusted in the suction power adjusting step 180.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the scope of the claims, are therefore intended to be embraced by the appended claims.

## Claims

1. A controlling method of a vacuum cleaner comprising:
a dust sensing step (110) for sensing dust in a cleaning object area by means of dust sensor (33) provided in the vacuum cleaner and converting the sensed dust into a percent rate;
a floor material sensing step (120) for sensing a material of the floor in the cleaning object area by means of a floor sensing step provided in the vacuum cleaner;
a standard setting step (140) for setting a dust suction standard of the vacuum cleaner based on the sensed material of the floor; and
a suction power determining step (170) for comparing the sensed dust rate with the dust suction standard and determining the suction power of the vacuum cleaner based on the result of the comparison,
wherein the dust suction standard in the standard setting step (140) is a preset dust rate.

2. The controlling method of the vacuum cleaner of claim 1, wherein a rotation speed of a brush (7) arranged in a nozzle (6) of the vacuum cleaner and a brush height are adjusted based on the set suction standard.

3. The controlling method of the vacuum cleaner of claim 1, further comprising:
a first brush setting step (150) for setting the rotation speed of the brush (7) that is arranged in the nozzle (6) of the vacuum cleaner after the standard setting step (140); and
a second brush setting step (160) for changing the height of the brush (7) after the first brush setting step (150).

4. The controlling method of the vacuum cleaner of claim 3, wherein the standard setting step (140), the first brush setting step (150) and the second brush setting step (160) are sequentially performed after sensing the floor material.

5. The controlling method of the vacuum cleaner of claim 1, further comprising:
a first brush setting step (150) for setting the rotation speed of the brush (7) arranged in the nozzle (6) of the vacuum cleaner after the standard setting step (140).

6. The controlling method of the vacuum cleaner of claim 5, wherein the standard setting step (140) and the first brush setting step (150) are sequentially performed after the floor material is sensed.

7. The controlling method of the vacuum cleaner of claim 1, wherein while the steps are repeatedly performed, a dust suction power of the vacuum cleaner is determined based on the sensed dust rate and floor material.

8. The controlling method of the vacuum cleaner of claim 7, further comprising:
a suction power adjusting step (180) for comparing a first determined suction power determined earlier with a second determined suction power determined later out of the repeatedly determined dust suction powers.

9. The controlling method of the vacuum cleaner of claim 8, wherein when the second determined suction power is larger than the first determined suction power in the suction power adjusting step (180), the suction power adjusting step (180) maintains the second determined suction power.

10. The controlling method of the vacuum cleaner of claim 8, wherein when the second determined suction power is smaller than the first determined suction power in the suction power adjusting step (180), the suction power adjusting step (180) maintains the second determined suction power after a preset time period passes.

## Patentansprüche

1. Steuerverfahren eines Staubsaugers, das aufweist:
einen Stauberfassungsschritt (110), um Staub in einem zu reinigenden Objektbereich mittels eines Staubsensors (33) zu erfassen, der im Staubsauger vorgesehen ist, und den Staub in einen Prozentsatz umzuwandeln;
einen Bodenmaterial-Erfassungsschritt (120), um ein Material des Bodens im zu reinigenden Objektbereich mittels eines im Reiniger vorgesehenen Bodenerfassungsschritts zu erfassen;
einen Standardfestlegungsschritt (140), um einen Staubsaugestandard des Staubsaugers basierend auf dem erfassten Bodenmaterial einzustellen; und
einen Saugleistungs-Bestimmungsschritt (170), um die erfasste Staubrate mit dem Staubsaugestandard zu vergleichen und die Saugkraft des Staubsaugers basierend auf dem Ergebnis des Vergleichs zu bestimmen,
wobei der Staubsaugestandard im Standardfestlegungsschritt (140) eine vorab festgelegte Staubrate ist.

2. Steuerverfahren des Staubsaugers nach Anspruch 1, wobei eine Drehzahl einer Bürste (7), die in einer Düse (6) des Staubsaugers angeordnet ist, und eine Bürstenhöhe basierend auf dem festgelegten Saugstandard angepasst werden.

3. Steuerverfahren des Staubsauers nach Anspruch 1, das weiterhin aufweist:
einen ersten Bürsteneinstellungsschritt (150), um die Drehzahl der in der Düse (6) des Staubsaugers angeordneten Bürste (7) nach dem Standardeinstellungsschritt (140) einzustellen; und
einen zweiten Bürsteneinstellungsschritt (160), um die Höhe der Bürste (7) nach dem ersten Bürsteneinstellungsschritt (150) zu ändern.

4. Steuerverfahren des Staubsaugers nach Anspruch 3, wobei der Standardeinstellungsschritt (140), der erste Bürsteneinstellungsschritt (150) und der zweite Bürsteneinstellungsschritt (160) nacheinander nach dem Erfassen des Bodenmaterials durchgeführt werden.

5. Steuerverfahren des Staubsauers nach Anspruch 1, das weiterhin aufweist:
einen ersten Bürsteneinstellungsschritt (150), um die Drehzahl der in der Düse (6) des Staubsaugers angeordneten Bürste (7) nach dem Standardeinstellungsschritt (140) einzustellen.

6. Steuerverfahren des Staubsaugers nach Anspruch 5, wobei der Standardeinstellungsschritt (140) und der erste Bürsteneinstellungsschritt (150) nacheinander nach dem Erfassen des Bodenmaterials durchgeführt werden.

7. Steuerverfahren des Staubsaugers nach Anspruch 1, wobei, während die Schritte wiederholt ausgeführt werden, eine Staubsaugleistung des Staubsaugers basierend auf der erfassten Staubrate und dem Bodenmaterial bestimmt wird.

8. Steuerverfahren des Staubsauers nach Anspruch 7, das weiterhin aufweist:
einen Saugleistungs-Einstellungsschritt (180), um die erste früher bestimmte Saugleistung mit einer zweiten später bestimmten Saugleistung aus den wiederholt bestimmten Staubsaugleistungen zu vergleichen.

9. Steuerverfahren des Staubsaugers nach Anspruch 8, wobei, wenn die zweite bestimmte Saugleistung größer als die erste bestimmte Saugleistung im Saugleistungs-Einstellungsschritt (180) ist, behält der Saugleistungs-Einstellungsschritt (180) die zweite bestimmte Saugleistung bei.

10. Steuerverfahren des Staubsaugers nach Anspruch 8, wobei, wenn die zweite bestimmte Saugleistung kleiner als die erste bestimmte Saugleistung im Saugleistungs-Einstellungsschritt (180) ist, behält der Saugleistungs-Einstellungsschritt (180) die zweite bestimmte Saugleistung bei, nachdem eine bestimmte Zeitspanne verstrichen ist.

## Revendications

1. Procédé de commande d'un aspirateur comprenant :
une étape de détection de poussière (110) consistant à détecter de la poussière dans une zone objet de nettoyage au moyen d'un capteur de poussière (33) prévu dans l'aspirateur et à convertir la poussière détectée en pourcentage ;
une étape de détection de matériau de sol (120) consistant à détecter un matériau du sol dans la zone objet de nettoyage au moyen d'un capteur de détection de sol prévu dans l'aspirateur ;
une étape de réglage de standard (140) consistant à régler un standard d'aspiration de poussière de l'aspirateur sur la base du matériau du sol détecté ; et
une étape de détermination de puissance d'aspiration (170) consistant à comparer le pourcentage de poussière détectée au standard d'aspiration de poussière et à déterminer la puissance d'aspiration de l'aspirateur sur la base du résultat de la comparaison,
dans lequel le standard d'aspiration de poussière dans l'étape de réglage de standard (140) est un pourcentage de poussière prédéfini.

2. Procédé de commande de l'aspirateur selon la revendication 1, dans lequel une vitesse de rotation d'une brosse (7) agencé dans un embout (6) de l'aspirateur et une hauteur de brosse sont ajustées sur la base du standard d'aspiration défini.

3. Procédé de commande de l'aspirateur selon la revendication 1, comprenant en outre :
une première étape de réglage de brosse (150) consistant à régler la vitesse de rotation de la brosse (7) qui est agencée dans l'embout (6) de l'aspirateur après l'étape de réglage de standard (140) ; et
une seconde étape de réglage de brosse (160) consistant à changer la hauteur de la brosse (7) après la première étape de réglage de brosse (150).

4. Procédé de commande de l'aspirateur selon la revendication 3, dans lequel l'étape de réglage de standard (140), la première étape de réglage de brosse (150) et la seconde étape de réglage de brosse (160) sont effectuées séquentiellement après détection du matériau du sol.

5. Procédé de commande de l'aspirateur selon la revendication 1, comprenant en outre :
une première étape de réglage de brosse (150) consistant à régler la vitesse de rotation de la brosse (7) agencée dans l'embout (6) de l'aspirateur après l'étape de réglage de standard (140).

6. Procédé de commande de l'aspirateur selon la revendication 5, dans lequel l'étape de réglage de standard (140) et la première étape de réglage de brosse (150) sont effectuées séquentiellement après détection du matériau du sol.

7. Procédé de commande de l'aspirateur selon la revendication 1, dans lequel, tandis que les étapes sont effectuées de manière répétée, une puissance d'aspiration de poussière est déterminée sur la base du pourcentage de poussière détectée et du matériau du sol.

8. Procédé de commande de l'aspirateur selon la revendication 7, comprenant en outre :
une étape d'ajustement de puissance d'aspiration (180) consistant à comparer une première puissance d'aspiration déterminée, qui est déterminée plus tôt, à une seconde puissance d'aspiration, qui est déterminée plus tard, parmi les puissances d'aspiration de poussière déterminées de manière répétée.

9. Procédé de commande de l'aspirateur selon la revendication 8, dans lequel, quand la seconde puissance d'aspiration déterminée est supérieure à la première puissance d'aspiration déterminée dans l'étape d'ajustement de puissance d'aspiration (180), l'étape d'ajustement de puissance d'aspiration (180) maintient la seconde puissance d'aspiration déterminée.

10. Procédé de commande de l'aspirateur selon la revendication 8, dans lequel, quand la seconde puissance d'aspiration déterminée est inférieure à la première puissance d'aspiration déterminée dans l'étape d'ajustement de puissance d'aspiration (180), l'étape d'ajustement de puissance d'aspiration (180) garde la seconde puissance d'aspiration déterminée après écoulement d'un laps de temps prédéfini.
